# EUROPÄISCHE PATENTANMELDUNG

(11) **EP 0 668 089 A1**
(43) Veröffentlichungstag der Anmeldung: **23.08.1995**
(21) Anmeldenummer: 94102355.8
(22) Anmeldetag: 17.02.1994
(51) Int. Cl.: A62D 3/00

(54) **Verfahren und Vorrichtung zur Umwandlung von Rest- und Abfallstoffen**

(71) Anmelder: Buck Werke GmbH & Co, D-73337 Bad Überkingen (DE)
(72) Erfinder: Wagner, Norbert, D-71522 Backnang (DE)
(74) Vertreter: Goddar, Heinz J., Dr.

(57) **Zusammenfassung**

Bei einem Verfahren zur Umwandlung von festen und/oder fluiden Rest- und Abfallstoffen werden diese aufgeschmolzen und in einem Zerstäubungsprozeß zerteilt. Der Zerstäubungsprozeß erfolgt über ein flüssiges oder gasförmiges Zerstäubungsmittel, wobei in einem Verfahrensschritt eine Stoffumwandlung der flüssigen Phase zu einem Endprodukt durchgeführt wird.

## Beschreibung

Die Erfindung betrifft ein Verfahren zur Umwandlung von festen und/oder fluiden Rest- und Abfallstoffen sowie eine Vorrichtung zur Durchführung dieses Verfahrens.

Mit der DE 28 07 753 ist ein Verfahren zur Herstellung von Schlackenwolle, insbesondere auch Hochofenschlacke bekannt geworden, bei dem die Hochofenschlacke über Düsen seitlich angeblasen wird und dadurch ein Teil der Schlacke aus dem sich ergießenden Strom weggerissen wird. Mit diesem Verfahren wird lediglich ein Teil der Schlacke in Schlackenwolle umgewandelt, der Großteil der Schlacke bleibt jedoch unbehandelt. Auch in der Schlacke enthaltene Schadstoffe erfahren keine Behandlung.

Der Erfindung liegt die Aufgabe zugrunde, ein Verfahren bereitzustellen, mit dem fluide oder verflüssigte Rest- und Abfallstoffe derart umgewandelt werden, daß ihre Schadstoffe entweder zerstört oder eingeschlossen werden.

Diese Aufgabe wird mit dem eingangs genannten erfindungsgemäßen Verfahren dadurch gelöst, daß die festen Rest- und Abfallstoffe zu einer flüssigen Phase aufgeschmolzen werden und diese in einem Zerstäubungsprozeß zerteilt wird, wobei der Zerstäubungsprozeß mit einem flüssigen oder gasförmigen Zerstäubungsmittel erfolgt und dabei in einem Verfahrensschritt eine Stoffumwandlung der flüssigen Phase zu einem Endprodukt durchgeführt wird.

Diese Stoffumwandlung erfolgt während des Zerstäubungsprozesses, also bei der Zerstäubung bzw. Zerteilung der flüssigen Phase. Die flüssige Phase ist entweder der flüssige Rest- oder Abfallstoff selbst oder ein aufgeschmolzener fester Rest- oder Abfallstoff. Unter der flüssigen Phase wird auch ein pastöser Rest- oder Abfallstoff, z.B. Klärschlamm, eine Suspension, eine Emulsion o.dgl. verstanden. Bei diesem Zerstäubungsprozeß werden die Schadstoffe entweder umgewandelt oder in das Endprodukt auslaugsicher eingeschlossen. Die Endprodukte sind aufgrund ihrer geringen Größe, die eine gleichmäßige Abkühlung bedingt, homogen und daher sehr stabil und enthalten keine eingeschlossenen Gase, so daß eine Bruchgefahr unwahrscheinlich ist. Das Endprodukt, das in Form von Pulver oder kleinen Kügelchen anfällt, kann problemlos weiterverarbeitet werden, z.B. als Filtermaterial, zum Sintern als Zuschlagstoff, in der Beton- und Baustoffindustrie usw. Das Endprodukt ist sehr kompakt und daher gut transport-, schütt- und lagerfähig. Es besitzt nur ein geringes Volumen und eine hohe Schüttdichte sowie gute Fließeigenschaften und kann daher auch z.B. zum Verfüllen von Hohlräumen im Untertagebau verwendet werden. Als Rest- und Abfallstoffe können z.B. Schlacken jeglicher Art aus Verbrennungsanlagen oder Verbrennungsreaktoren, Hydrieranlagen, Feststoffrückstände aus Pyrolyseanlagen, feste, pastöse, flüssige, gasförmige oder sonstige Abfälle, Sonderabfälle bzw. besonders überwachungsbedürftige Abfälle, Reststoffe aus Prozessen bzw. Reststoffe im Sinne der Abfall-Reststoff-Überwachungsverordnung, Schleifschlämme, usw. verwendet werden.

Vorteilhaft werden dem Zerstäubungsmittel ein oder mehrere flüssige oder gasförmige chemische Behandlungsmittel zugesetzt oder als Zerstäubungsmittel wird ein chemisches Behandlungsmittel oder ein Gemisch aus mehreren chemischen Behandlungsmitteln, die flüssig oder gasförmig sein können, verwendet. Es kann also dem Zerstäubungsmittel ein oder mehrere weitere Mittel zugesetzt werden, mit dem die flüssige Phase behandelt wird. Diese Behandlung kann chemischer oder physikalischer Natur sein. Vorteilhaft ist das Zerstäubungsmittel oder das chemische Behandlungsmittel ein Oxidationsmittel, insbesondere Luft, Sauerstoff, H₂O₂ o.dgl. Als Zerstäubungsmittel kann jedoch auch ein Inertgas oder ein reduzierendes Behandlungsmittel (z.B. Na HSO₃ zur Reduktion von Chromat oder H₂N-SO₃H zur Reduktion von Nitrit) verwendet werden. Das Behandlungsmittel kann dabei auch dem Zerstäubungsmittel entsprechen. Bei einer Weiterbildung ist vorgesehen, daß als Zerstäubungsmittel flüssige und/oder gasförmige Rest- oder Abfallstoffe, insbesondere Rauch- oder Abgase aus Rest- und Abfallentsorgungsanlagen, z.B. Abfallverbrennungsanlagen, verwendet werden. Diese gasförmigen oder flüssigen Stoffe werden dann beim Zerstäubungsprozeß ebenfalls mitbehandelt, so daß die darin enthaltenen Schadstoffe ebenfalls zerstört oder umgewandelt werden. Außerdem besteht die Möglichkeit, dem Zerstäubungsmittel ein Zusatzmittel zum Einstellen des pH-Wertes, zur Schaumunterdrückung und/oder zur Belagbildungsunterdrückung usw. zuzusetzen. Es können auch Katalysatoren zugesetzt werden.

Bevorzugt entstehen bei der Zerstäubung der flüssigen Phase Partikel mit einem Durchmesser von 5 µm bis 5 mm, insbesondere 10 µm bis 2 mm. Diese Partikel weisen eine kugelförmige, perlenförmige oder eine topologisch ähnliche Form auf oder sind als Faser ausgebildet. Beim Zerstäubungsprozeß wird die flüssige Phase vollständig zerstäubt. Als Endprodukt verbleiben also lediglich die durch die Zerstäubung entstehenden Partikel, die sofort weiterverarbeitet werden können. Diese Partikel weisen in der Regel eine Temperatur auf, die unterhalb von 100°C liegt.

Vorzugsweise wird die flüssige Phase bei der Zerstäubung schnell oder schockartig abgekühlt. Die Abkühlgeschwindigkeit beträgt dabei 10³ bis 10⁸ K/s. Die große Oberfläche der Partikel führt bei der Zerstäubung zu einer sofortigen Entzündung der Schadstoffe, die dabei aufoxidiert werden. Damit wird die vollständige Zerstörung von thermisch stabilen Schadstoffen bzw. die vollständige Umwandlung und Einbindung von Schadstoffen garantiert und eine Neubildung von toxischen Stoffen wie PCDD und PCDF durch die schockartige Unterkühlung verhindert. Wegen des geringen Kugeldurchmessers ist die Ausbrennung vollständig und die resultierenden Endprodukte sind geruchlos und umweltneutral. Durch die schockartige Abkühlung innerhalb des oben angegebenen Bereichs, vorzugsweise zwischen 10⁴ bis 10⁶ K/s können keine organischen Schadstoffe neu entstehen. Durch die schnelle Abkühlung wird die flüssige Phase bei der Zerstäubung in einen unterkühlten Zustand überführt.

Mit Vorzug weist die flüssige Phase vor der Zerstäubung eine Temperatur von 0°C bis 1800°C, insbesondere von 600°C bis 1400°C auf. Selbst bei hohen Temperaturen ist durch die schockartige Abkühlung sichergestellt, daß die Schadstoffe entweder vollständig zerstört oder auslaugsicher im Endprodukt eingeschlossen sind oder eine Neubildung der Schadstoffe wie PCDD und PCDF wird mit Sicherheit vermieden.

Bei einer Weiterbildung ist vorgesehen, daß die flüssige Phase bei der Zerstäubung, insbesondere zusammen mit einem zu reinigenden Stoff einer Entspannung unterzogen wird. Durch diese Entspannung kann die flüssige Phase explosionsartig zerstäubt werden. Die flüssige Phase wird bevorzugt mit einer Geschwindigkeit von 10⁻³ bis 300 m/s dem Zerstäubungsmittel zugeführt. Der Druck der flüssigen Phase beträgt dabei ≧ 1 bar (absolut). Die flüssige Phase kann aber auch abgesaugt werden.

Bevorzugt werden mit den Prozeßparametern des Zerstäubungsprozesses die geometrische Form und Größe des Endprodukts sowie dessen morphologische und topologische Beschaffenheit verändert, insbesondere werden Körper wie Kugeln, Perlen, Fasern usw. hergestellt. Außerdem kann die flüssige Phase in einem Zerstäubungsraum zerstäubt und über eine Abscheidevorrichtung (z.B. ein Zyklonfilter, Zellradschleuse usw.) in einen Transport- oder Lagerbehälter ausgetragen werden.

Zur Optimierung des Verfahrens werden in die flüssige Phase vor der Zerstäubung andere Rest- oder Abfallstoffe eingebracht. Die flüssige Phase kann auch von einem oder mehreren gasförmigen Behandlungsmitteln oder anderen gasförmigen Rest- oder Abfallstoffen durchperlt werden.

Insbesondere bei der Behandlung von Schleifschlämmen wird aus der flüssigen Phase vor dem Zerstäuben wenigstens ein Phasenanteil ausgeschieden und werden die beiden Anteile getrennt gleichzeitig oder nacheinander zerstäubt. Auf diese Weise kann z.B. der Metallanteil aus dem Schleifschlamm nach dem Aufschmelzen abgeschieden und durch den Zerstäubungsprozeß als Metallpulver zur Wiederverwendung zurückgewonnen werden.

Für die Zerstäubung können z.B. Zwei-, Drei-, Vier- oder Mehrstoffdüsen verwendet werden. Über diese Mehrstoffdüsen können Zerstäubungsmittel, Behandlungsmittel, gasförmige oder flüssige Rest- und Abfallstoffe oder weitere Mittel dem Zerstäubungsprozeß zugeführt werden. Diese einzelnen Stoffe können getrennt voneinander oder gleichzeitig zugeführt werden, wobei sie sich vorteilhaft erst nach dem Austritt aus der Düse vermischen.

Vorteilhaft wird das Zerstäubungsmittel über einen Kreislauf zur Wiederverwendung zurückgeführt. Dies ist insbesondere bei einem Inertgas oder bei gasförmigen Rest- und Abfallstoffen denkbar.

Vorzugsweise wird das Verfahren seperat oder im Verbund mit einer thermisch/physikalischen oder chemisch/physikalischen Behandlung in einer Rest- und Abfallentsorgungsanlage eingesetzt. Das Verfahren kann also in einer mobilen oder stationären Anlage angewandt werden.

Vorteilhaft folgt dem Zerstäubungsprozeß ein Behandlungsprozeß mit UV-Licht oder mit Mikrowellen.

Die eingangs genannte Aufgabe wird mit einer Vorrichtung mit einem die flüssige Phase enthaltenden Behälter mit wenigstens einem Auslauf und wenigstens einer Düse für das Zerstäubungsmittel dadurch gelöst, daß die Düse als Ringdüse ausgebildet ist, die die durchlaufende flüssige Phase umfaßt und vollständig zerstäubt.

Da die Düse als Ringdüse ausgebildet ist und den Auslauf des Behälters umfaßt, ist sichergestellt, daß die aus dem Behälter auslaufende flüssige Phase vollständig zerstäubt wird. Bevorzugt ist die Düse als Mehrstoffdüse ausgebildet, so daß das Zerstäubungsmittel und ein oder mehrere Behandlungsmittel gleichzeitig oder unabhängig voneinander dem Zerstäubungsprozeß zugeführt werden können.

Vorzugsweise ist der die flüssige Phase enthaltene Behälter als austauschbares Modul an der Vorrichtung vorgesehen. Es können auf diese Weise jeweils die zum Zerstäuben bestimmter Rest- und Abfallstoffe geeigneten Behälter eingesetzt werden bzw. einzelne Behälter zu Wartungs- und Reparaturzwecken entfernt und durch neue ausgestauscht werden.

Insbesondere für die Behandlung von Schleifschlämmen weist der die flüssige Phase enthaltende Behälter eine Abscheidekammer auf, die seperat mit einer Düse zum Zerstäuben des abgeschiedenen Anteils versehen ist. In dieser Kammer, die anderen Kammern vorgelagert ist, wird z.B. der Anteil der flüssigen Phase angesammelt, der das größte spezifische Gewicht aufweist, was bei Metallschleifschlämmen in der Regel der Metallanteil ist.

Bei der Zerstäubung von Rest- und Abfallstoffen die leicht flüchtige Anteile aufweisen, ist der Auslauf und die Düse an der Oberseite des die flüssige Phase enthaltenden Behälters vorgesehen. Es wird also nicht nach unten, sondern nach oben zerstäubt.

Bei einer Weiterbildung ist vorgesehen, daß mehrere Behälter kaskadenartig hintereinander geschaltet sind. Diese Ausgestaltung wird insbesondere dann verwendet, wenn Flüssigkeiten durch den Zerstäubungsprozeß behandelt werden sollen. Als Flüssigkeiten kommen z.B. Sickerwasser, Prozeß- und Waschwasser aus vielfältigen Produktionsprozessen oder aus der chemischen Industrie stammende Flüssigkeiten in Frage.

Vorzugsweise ist dem bzw. sind den Behältern jeweils eine Einheit zur UV-Bestrahlung der zerstäubten flüssigen Phase bzw. des Endprodukts nachgeschaltet. Durch die UV-Bestrahlung werden die verbleibenden Schadstoffe weiterbehandelt. So können im Zusammenhang mit H₂O₂ OH-Radikale gebildet werden, die als Oxidationsmittel dienen.

Außerdem dient die UV-Bestrahlung zur Sterilisation. Mikrowellen können zum Stoffaustausch, als Heizung usw. verwendet werden.

Weitere Vorteile, Merkmale und Einzelheiten ergeben sich aus der nachfolgenden Beschreibung, in der unter Bezugnahme auf die Zeichnung besonders bevorzugte Ausführungsbeispiele im einzelnen dargestellt sind. Dabei zeigen:
- Figur 1: eine schematische Wiedergabe einer ersten Ausführungsform der erfindungsgemäßen Vorrichtung;
- Figur 2: eine vergrößerte Darstellung eines die flüssige Phase enthaltenden Behälters sowie dem sich an den Behälter anschließenden Zerstäubungsraum;
- Figur 3: eine schematische Wiedergabe eines weiteren Ausführungsbeispiels eines die flüssige Phase enthaltenden Behälters mit einer Abscheidekammer;
- Figur 4: eine weitere Ausführungsform eines die flüssige Phase enthaltenden Behälters mit oberhalb des Behälters angeordneten Düsen;
- Figur 5: eine schematische Wiedergabe eines weiteren Ausführungsbeispiels mit mehreren kaskadenartig übereinander angeordneten Behältern;
- Figur 6: eine vergrößerte Wiedergabe eines Zerstäubungsmoduls eines Behälters;
- Figur 7: ein Ausführungsbeispiel eines Behälters mit vom Zerstäubungsmedium durchperlter flüssiger Phase; und
- Figur 8: zwei Ausführungsformen von Düsen zum Zerstäuben von Flüssigkeit-Gas-Gemischen.

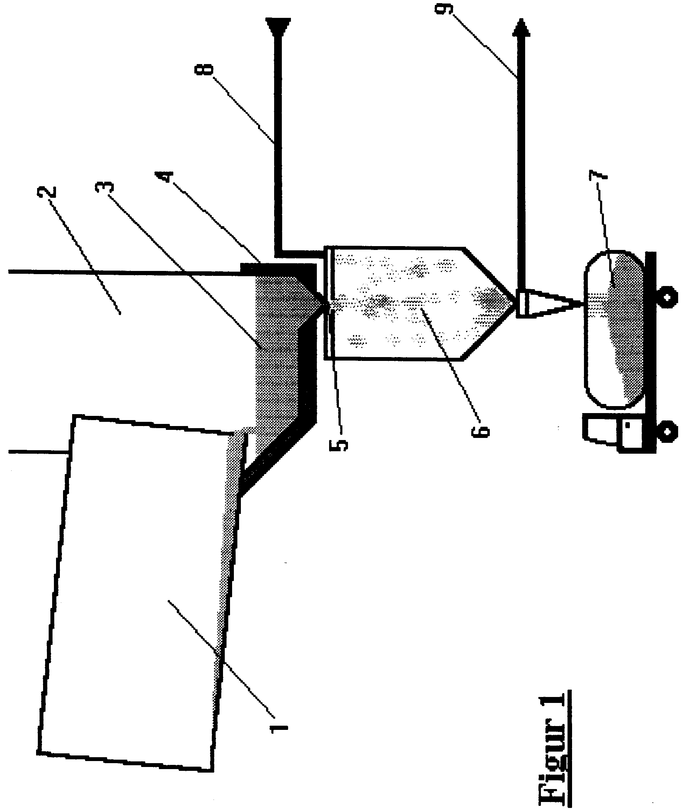

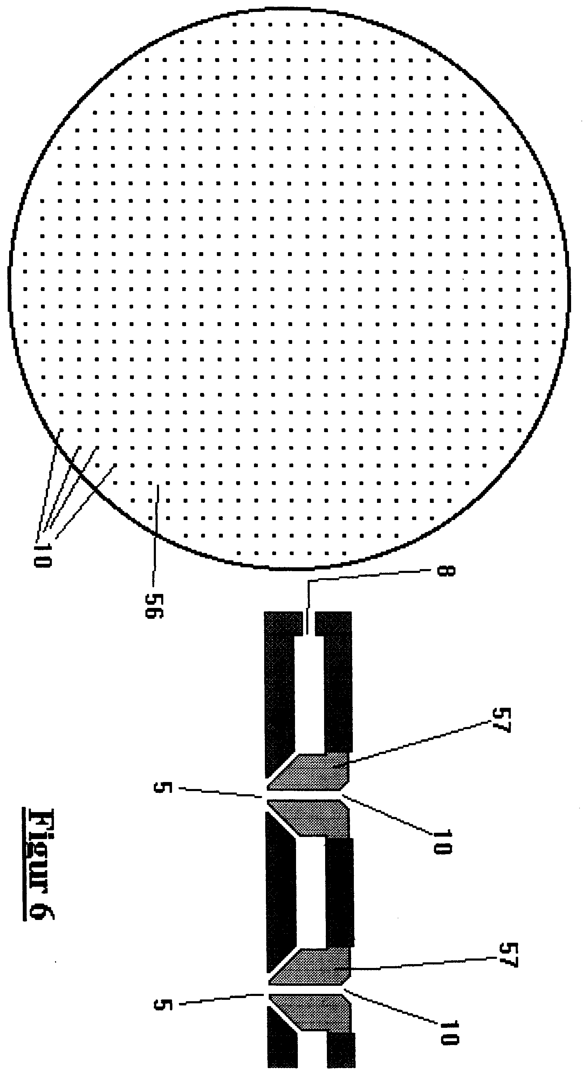

Bei dem in der Figur 1 dargestellten Ausführungsbeispiel ist ein Drehofen 1, eine Nachbrennkammer 2, ein eine flüssige Phase 3 enthaltender Behälter 4, eine Düse 5, ein Zerstäubungsraum 6 sowie ein Transport- oder Lagerbehälter 7 erkennbar. In dem Drehofen 1 werden die Rest- und Abfallstoffe erhitzt und die festen Anteile aufgeschmolzen. Die Schmelze fließt in die Nachbrennkammer 2 und die flüssige Phase 3 sammelt sich im Behälter 4. Dort ergießt sich die flüssige Phase 3 durch die Düse 5, die weiter unten, insbesondere zur Figur 6, näher beschrieben wird. Diese Düse 5 ist als Ringdüse ausgebildet und ihr werden über eine Leitung 8 z.B. Rauchgase (z.B. mit 10 % Sauerstoffanteil), Luft oder Sauerstoff zugeführt. Dabei bilden die Luft oder der Sauerstoff bereits das Behandlungsmittel, mit dem die die Düse 5 durchtretende flüssige Phase 3 zerstäubt und behandelt wird. Die Zerstäubung und die Behandlung erfolgt in einem Verfahrensschritt, wobei die flüssige Phase 3 in Partikel mit der o.g. Größe vollständig aufgeteilt wird und dabei die Schadstoffe entweder zerstört oder in die Partikel eingeschlossen werden. Die einzelnen Partikel werden im Zerstäubungsraum 6 aufgefangen und dem Transport- und Lagerbehälter 7 zugeführt. Am Ausgang des Zerstäubungsraums 6 befindet sich eine weitere Leitung 9, über die das Zerstäubungsmittel abgeführt und ggf. dem Prozeß über die Leitung 8 wieder zugeführt wird.

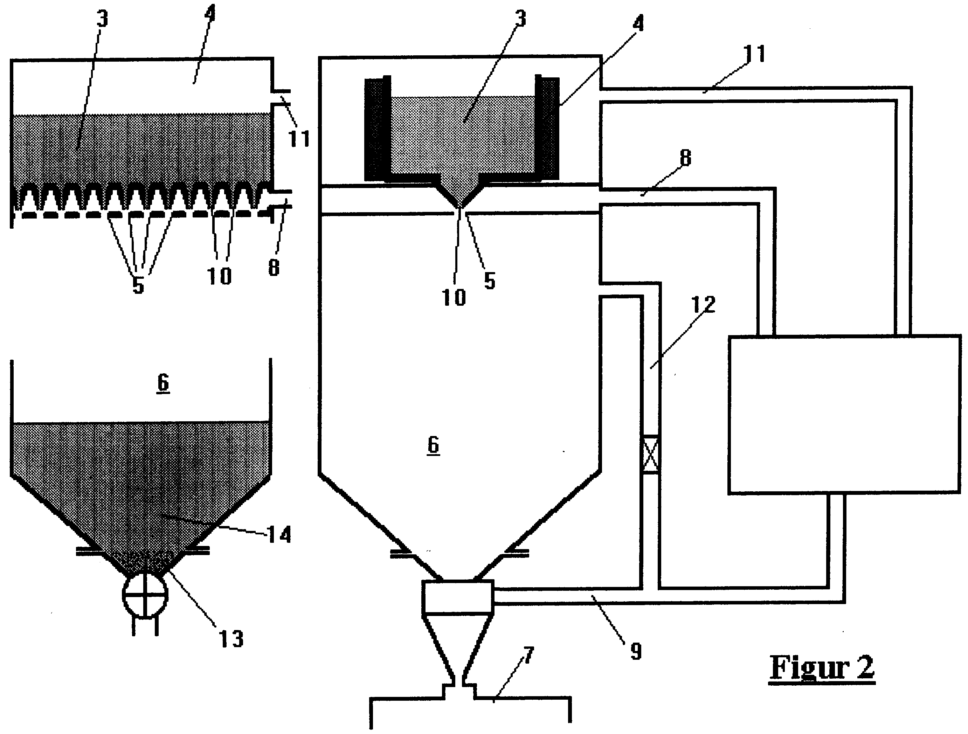

Die Figur 2 zeigt eine vergrößerte Wiedergabe der Vorrichtung, wobei der Behälter 4 mit einem oder mit mehreren Ausläufen 10 versehen sein kann. Ebenfalls sind ein oder mehrere Düsen 5 vorgesehen, die zentral über die Leitung 8 mit dem Zerstäubungsmittel bzw. mit einem Gemisch aus Zerstäubungsmittel und Behandlungsmittel versorgt werden. Das Behandlungsmittel kann ein katalytisches, oxidierendes, reduzierendes oder inertes Behandlungsmittel sein oder über das Behandlungsmittel kann z.B. der pH-Wert eingestellt werden oder es ist ein schaumunterdrückendes Mittel. Der Druck des Zerstäubungsmittels kann so gewählt werden, daß am Düsenauslaß eine Austrittsgeschwindigkeit von etwa 300 m/s herrscht. Die Figur 2 zeigt eine weitere Leitung 11, die zur Oberfläche der flüssigen Phase 3 führt und über die die flüssige Phase 3 mit Druck beaufschlagt werden kann. Ferner ist der Zerstäubungsraum 6 an eine Leitung 12 angeschlossen, über die dem Zerstäubungsraum 6 ein weiteres Behandlungsmittel zugeführt werden kann, mit dem die zerstäubten Partikel nach dem Verlassen der Düse 5 einer weiteren Behandlung unterzogen werden können. Außerdem können die Partikel, die in Figur 2 mit 13 bezeichnet sind, außerdem mit einem flüssigen Behandlungsmedium 14, welches sich im unteren Bereich des Zerstäubungsraumes 6 befindet, behandelt werden. Dieses kann z.B. eine Lauge oder eine Säure sein.

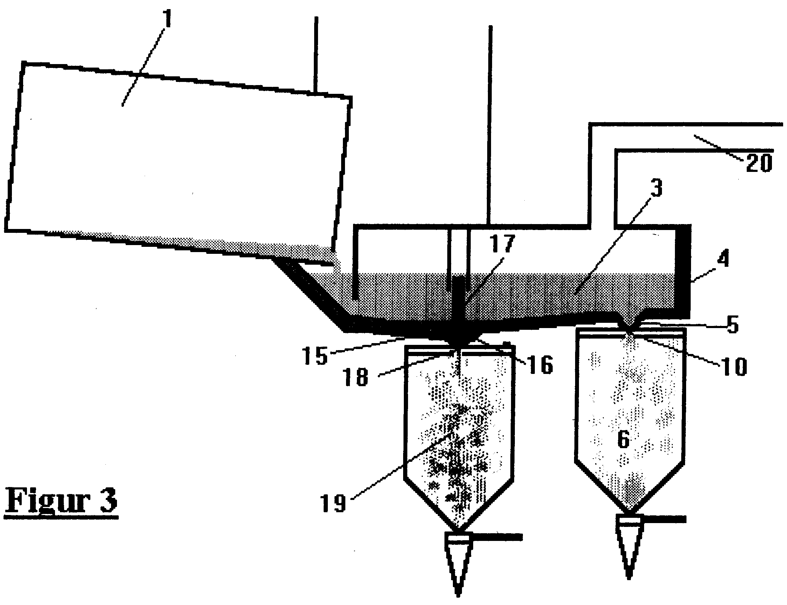

Die Figur 3 zeigt ein Auführungsbeispiel, bei dem der Behälter 4 eine Abscheidekammer 15 aufweist. Aus dem Drehofen 1 ergießen sich die verflüssigten Rest- und Abfallstoffe in den Behälter 4, wobei sie den Behälter 4 von links nach rechts durchlaufen. Da die Abscheidekammer 15 tiefer liegt als der Auslauf 10, sammeln sich in der Abscheidekammer 15 Anteile der flüssigen Phase an, die ein großes spezifisches Gewicht aufweisen. Derartige Behälter 4 werden in der Regel dann verwendet, wenn als Rest- und Abfallstoffe Metallschleifschlämme verwendet werden. In diesem Fall sammeln sich die aufgeschmolzenen Metalle 16 in der Abscheidekammer 15 an und treiben einen Veschlußstopfen 17, der eine Düse 18 verschließt, auf. Der übrige Anteil der flüssigen Phase 3 befindet sich oberhalb der Metallschmelze 16 und gelangt zur Düse 5 bzw. zum Auslaß 10. Das geschmolzene Metall 16 wird mit einem inerten Zerstäubungsmittel zerstäubt und im Zerstäubungsraum 19 fällt Metallpulver an, welches wiederverwendet werden kann. Der über die Düse 5 zerstäubte Anteil der flüssigen Phase 3 fällt im Zerstäubungsraum 6 an und wird wie weiter oben beschrieben aufgefangen bzw. abtransportiert. Als Zerstäubungsmittel kann hier z.B. Luft dienen. Oberhalb der flüssigen Phase 3 kann z.B. über eine Leitung 20 eine inerte oder reduzierende Atmosphäre oder ein sonstiges Gas zugeführt werden, die, falls notwendig, auch unter Druck stehen kann. Sobald der Metallanteil 16 absinkt, verschließt der Verschlußstopfen 17 die Düse 18, so daß hier kein nichtmetallischer Anteil der flüssigen Phase 3 austreten kann.

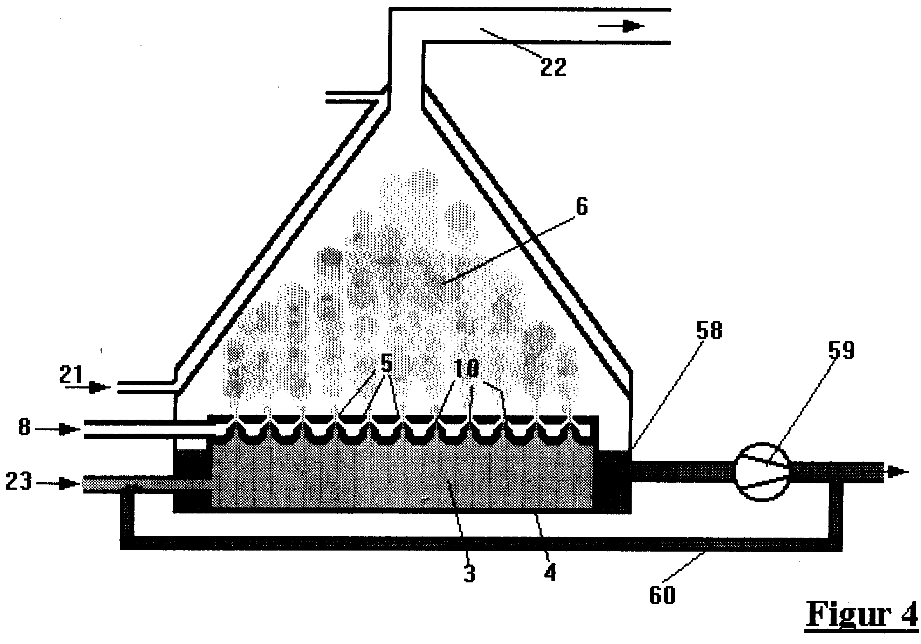

In der Figur 4 ist ein Ausführungsbeispiel eines Behälters 4 dargestellt, mit dem eine leicht flüchtige Stoffe enthaltende flüssige Phase 3 zerstäubt werden kann. Bei diesem Ausführungsbeispiel liegen die Ausläufe 10 sowie die Düsen 5 oberhalb des Behälters 4 und münden in den ebenfalls oberhalb des Behälters 4 sich befindenden Zerstäubungsraum 6. Der Zerstäubungsraum 6 ist doppelwandig ausgebildet, so daß er über eine Temperierleitung 21 beheizbar oder kühlbar ist. Der Austrag erfolgt über eine Leitung 22. Die zu zerstäubende flüssige Phase 3 gelangt über eine Leitung 23 in den Behälter 4. Das sich bildende Kondensat 58 wird über eine Pumpe 59 abgeführt bzw. teilweise über eine Leitung 60 rückgeführt.

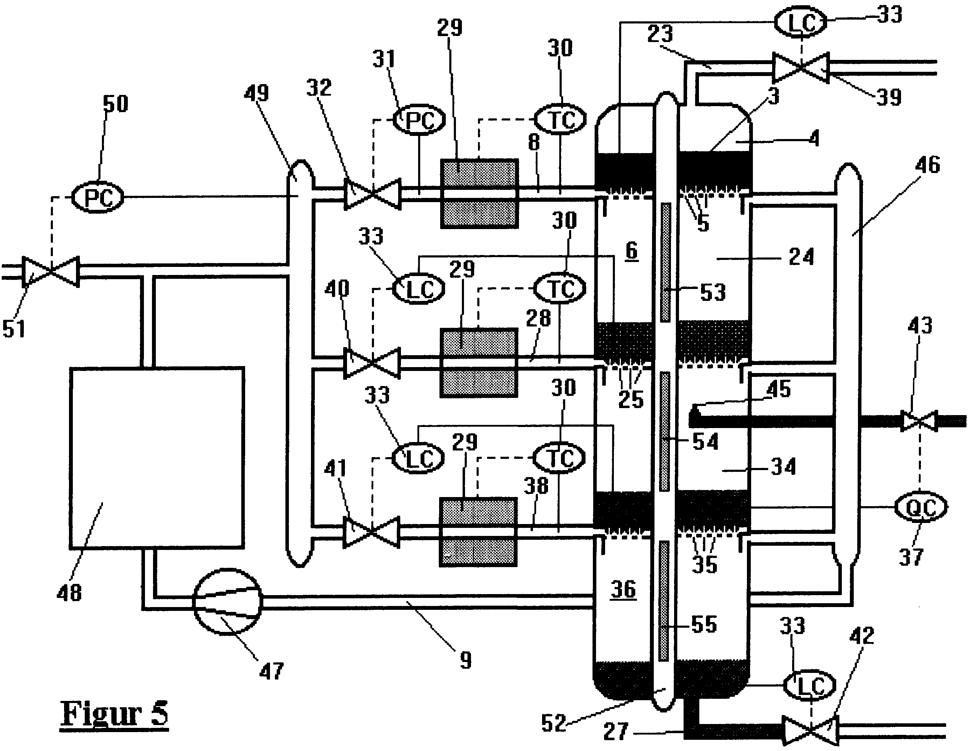

In der Figur 5 ist eine Vorrichtung zur Behandlung von Flüssigkeiten dargestellt. Diese Vorrichtung ist modular aufgebaut, wobei drei Behälter 4, 24 und 34 kaskadenartig übereinandergeschaltet sind und die flüssige Phase 3 über eine Leitung 23 dem obersten Behälter 4 zugeführt wird. Dort wird die flüssige Phase 3 wie weiter oben beschrieben über mehrere Düsen 5 zerstäubt und gelangt in den Zerstäubungsraum 6, der gleichzeitig den Behälter 24 bildet. Vom Behälter 24 gelangt die Flüssigkeit über Düsen 25 in einen Zerstäubungsraum 26, der gleichzeitig den Behälter 34 bildet. Von hier gelangt die Flüssigkeit über Düsen 35 in einen Zerstäubungsraum 36, wo sie gesammelt und über eine Leitung 27 abgeführt wird. Die Düsen 5, 25 und 35 werden über Leitungen 8, 28 und 38 mit einem Zerstäubungsmedium und/oder einem Behandlungsmedium versorgt. Diese Leitungen sind jeweils über eine Heizung 29 beheizbar, so daß das Zerstäubungsmittel an der Düse die gewünschte Temperatur aufweist und z.B. Vereisungen vermieden werden. In den Leitungen 8, 28 und 38 befinden sich Temperatursensoren 30, die die Heizung 29 ansteuern. Außerdem befindet sich in der Leitung 8 ein Drucksensor 31, der ein Strömungsventil 32, welches der Leitung 8 vorgeschaltet ist, ansteuert. In den Behältern 4, 24 und 34 befinden sich außerdem Pegel 33, über die die Befüllung der Behälter ermittelt wird und die Strömungsventile 39 bis 42 ansteuern. Im Behälter 34 befinden sich ein pH-Sensor 37, der ein Strömungsventil 43 ansteuert, welches in einer Zuleitung 44 sitzt, über die ein den pH-Wert veränderndes Behandlungsmittel über eine Düse 45 in den Zerstäubungsraum 46 eingesprüht werden kann. Die Auffangräume 6, 26 und 36 sind über einen Sammler 46 mit einem Gebläse 47 verbunden, welches in eine Gasaufbereitungsanlage 48 mündet. Dort wird das Zerstäubungsmittel aufbereitet und dem Kreislauf wieder zugeführt. In einem Verteiler 49 befindet sich ein Drucksensor 50, der mit einem Strömungsventil 51 verbunden ist. Über das Strömungsventil 51 kann frisches Zerstäubungsmittel dem Kreislauf zugeführt werden.

Ferner ist in Figur 5 erkennbar, daß die übereinanderliegenden Behälter 4, 24 und 34 von einer Lichtleiste 52 vertikal durchsetzt sind, wobei die Lichtleiste 52 Strahlungseinheiten 53 bis 55 enthält, die sich über die vertikale Erstreckung der Auffangräume 6, 26 und 36 erstrecken. Diese Strahlungseinheiten 53 bis 55 enthalten UV-Strahler, über die die zerstäubte Flüssigkeit nach dem Verlassen der Düsen 5, 25 und 35 eine weitere Behandlung erfährt. Üblicherweise befindet sich die Lichtleiste 52 zentral in den Behältern 4, 24 und 34, wobei jedoch auch mehr als eine Lichtleiste 52 vorgesehen sein können. Ferner ist noch zu erwähnen, daß entweder der zu behandelnden Flüssigkeit oder dem Zerstäubungsmittel ein Behandlungsmittel zugesetzt werden kann, welches die Schaumbildung oder Belagbildung unterdrückt. Der modulare Aufbau hat den Vorteil, daß die Anzahl der Behälter 4, 24 und 34 exakt an die zu behandelnden Rest- und Abfallstoffen angepaßt werden kann, d.h. daß mehr oder weniger Behälter zusammengeschaltet werden können.

Die Figur 6 zeigt beispielhaft ein Zerstäubungsmodul 56 eines Behälters, wobei deutlich erkennbar ist, daß das Zerstäubungsmodul 56 mit einer Vielzahl von Ausläufen 10 versehen ist. Jeder Auslauf 10 mündet in eine Düse 5, wie es beispielhaft im rechten Teil der Figur 6 dargestellt ist. Diese Düsen 5 werden zentral über die Leitung 8 mit dem Zerstäubungs- und/oder Behandlungsmittel versorgt. Diese Zerstäubungs- und/oder Behandlungsmittel umgreift den Strahl der flüssigen Phase 3 vollständig und zieht diesen aus dem Behälter 4 heraus. Bemerkenswert ist noch, daß die einzelnen, die Düse 5 bildenden Elemente 57 unabhängig voneinander einstellbar sind. Außerdem sind sie bei Verschleiß oder zu Reperaturzwecken einzeln auswechselbar.

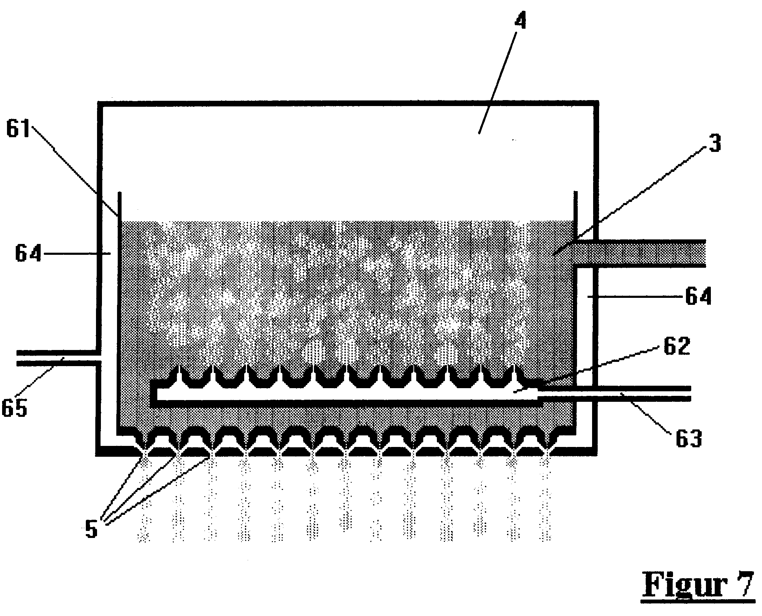

Die Figur 7 zeigt einen Behälter 4 in den eine Wanne 61 eingesetzt ist, die die flüssige Phase 3 enthält. Die flüssige Phase 3 kann auch direkt im Behälter 4 enthalten sein. In der flüssigen Phase 3 befindet sich eine Gasverteileinrichtung 62 durch die z.B. Rauchgas über eine Leitung 63 in die flüssige Phase 3 eingeperlt wird. Auf diese Weise wird das Rauchgas gereinigt und verläßt die flüssige Phase 3 über deren Oberfläche und gelangt über Leitungen 64 zu den Düsen 5, wo es als Zerstäubungsmittel die flüssige Phase 3 zerstäubt. Dem gereinigten Rauchgas (es kann auch ein anderes gasförmiges Medium verwendet werden) kann über eine Leitung 65 z.B. ein Behandlungsmedium zugeführt bzw. beigemischt werden. Das Rauchgas kann unter einem Druck von z.B. 20 bar stehen, der auch auf die Oberfläche der flüssigen Phase 3 wirkt.

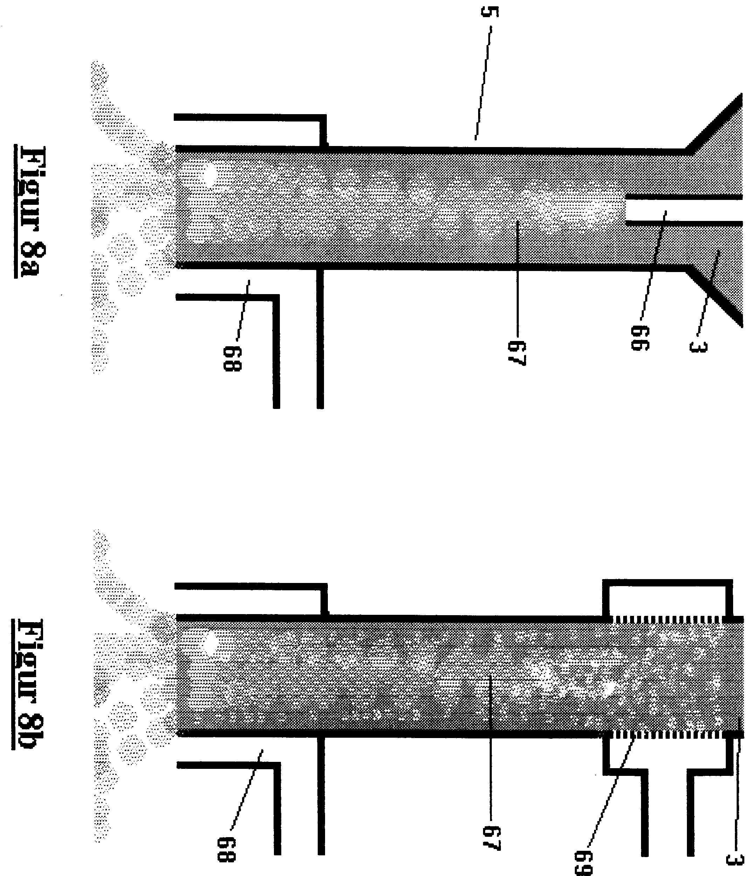

Die Figur 8a zeigt eine Ausführungsform einer Düse 5, die koaxial einen Gaskanal 66 aufweist, über dem in die flüssige Phase 3 ein Zerstäubungsmittel zugeführt wird. Dieses Gas-Flüssigkeitsgemisch 67 tritt am Düsenende aus und zerstäubt. Dabei kann das Gemisch unter Druck stehen und/oder es kann abgesaugt werden. Außerdem kann ein Zerstäubungsmittel über einen Ringkanal 68 zugeführt werden, das die Zerstäubung unterstützt.

Die Figur 8b zeigt ein Ausführungsbeispiel, bei dem an Stelle eines Gaskanals eine gasdurchlässige Membrane 69 vorgesehen ist, über die das Zerstäubungsmedium der flüssigen Phase 3 zugesetzt wird. An Stelle des Zerstäubungsmittels kann in beiden Fällen auch ein Behandlungsmittel verwendet werden.

## Patentansprüche

1. Verfahren zur Umwandlung von festen und/oder fluiden Rest- und Abfallstoffen, bei dem die festen Rest- und Abfallstoffe aufgeschmolzen werden und die flüssige Phase (3) in einem Zerstäubungsprozeß zerteilt wird, wobei der Zerstäubungsprozeß mit einem flüssigen oder gasförmigen Zerstäubungsmittel erfolgt und dabei in einem Verfahrensschritt eine Stoffumwandlung der flüssigen Phase (3) zu einem Endprodukt durchgeführt wird.

2. Verfahren nach Anspruch 1, dadurch gekennzeichnet, daß dem Zerstäubungsmittel ein oder mehrere flüssige oder gasförmige chemische Behandlungsmittel zugesetzt werden oder als Zerstäubungsmittel ein chemisches Behandlungsmittel oder ein Gemisch aus mehreren chemischen Behandlungsmitteln verwendet wird.

3. Verfahren nach Anspruch 2, dadurch gekennzeichnet, daß als Zerstäubungsmittel oder chemisches Behandlungsmittel ein Oxidationsmittel, insbesondere Sauerstoff H₂O₂, Luft o.dgl. verwendet wird.

4. Verfahren nach Anspruch 2, dadurch gekennzeichnet, daß als Zerstäubungsmittel ein Inertgas oder ein reduzierendes Behandlungsmittel oder ein Katalysator verwendet wird.

5. Verfahren nach Anspruch 1 oder 2, dadurch gekennzeichnet, daß als Zerstäubungsmittel flüssige und/oder gasförmige Rest- oder Abfallstoffe, insbesondere Rauch- oder Abgase aus Rest- und Abfallstoffentsorgungsanlagen, z.B. Abfallverbrennungsanlagen, verwendet werden.

6. Verfahren nach einem der vorhergehenden Ansprüche, dadurch gekennzeichnet, daß bei der Zerstäubung der flüssigen Phase (3) Partikel (13) mit einem Durchmesser von 5 µm bis 5 mm, insbesondere 10 µm bis 2 mm hergestellt werden.

7. Verfahren nach einem der vorhergehenden Ansprüche, dadurch gekennzeichnet, daß in den Rest- und Abfallstoffen enthaltende Schadstoffe bei der Zerstäubung zerstört bzw. umgewandelt und/oder in das Endprodukt eingebunden werden.

8. Verfahren nach einem der vorhergehenden Ansprüche, dadurch gekennzeichnet, daß beim Zerstäubungsprozeß die flüssige Phase (3) vollständig zerstäubt wird.

9. Verfahren nach einem der vorhergehenden Ansprüche, dadurch gekennzeichnet, daß die flüssige Phase (3) bei der Zerstäubung schnell oder schockartig abgekühlt wird.

10. Verfahren nach einem der vorhergehenden Ansprüche, dadurch gekennzeichnet, daß die flüssige Phase (3) mit einer Abkühlgeschwindigkeit von 10³ bis 10⁸ K/s abgekühlt wird.

11. Verfahren nach einem der vorhergehenden Ansprüche, dadurch gekennzeichnet, daß die flüssige Phase (3) bei der Zerstäubung in einen unterkühlten Zustand überführt wird.

12. Verfahren nach einem der vorhergehenden Ansprüche, dadurch gekennzeichnet, daß die flüssige Phase (3) bei der Zerstäubung, insbesondere zusammen mit einem zu reinigenden gasförmigen Stoff einer Entspannung unterzogen wird.

13. Verfahren nach einem der vorhergehenden Ansprüche, dadurch gekennzeichnet, daß die flüssige Phase (3) mit einer Geschwindigkeit von 10⁻³ bis 300 m/s dem Zerstäubungsmittel zugeführt wird.

14. Verfahren nach einem der vorhergehenden Ansprüche, dadurch gekennzeichnet, daß die flüssige Phase (3) mit einem Druck von ≧ 1 bar dem Zerstäubungsmittel zugeführt wird.

15. Verfahren nach einem der vorhergehenden Ansprüche, dadurch gekennzeichnet, daß die flüssige Phase (3) abgesaugt wird.

16. Verfahren nach einem der vorhergehenden Ansprüche, dadurch gekennzeichnet, daß mit den Prozeßparamertern des Zerstäubungsprozesses die geometrische Form und Größe des Endprodukts sowie dessen morphologische und topologische Beschaffenheit verändert, insbesondere Körper wie Kugeln, Perlen, Fasern usw. hergestellt werden.

17. Verfahren nach einem der vorhergehenden Ansprüche, dadurch gekennzeichnet, daß die flüssige Phase (3) direkt in einen Transport- oder Lagerbehälter (7) zerstäubt wird.

18. Verfahren nach einem der vorhergehenden Ansprüche, dadurch gekennzeichnet, daß in die flüssige Phase (3) vor der Zerstäubung andere Rest- oder Abfallstoffe eingebracht werden.

19. Verfahren nach einem der vorhergehenden Ansprüche, dadurch gekennzeichnet, daß die flüssige Phase (3) von einem oder mehreren gasförmigen Behandlungsmittels durchsetzt wird.

20. Verfahren nach Anspruch 19, dadurch gekennzeichnet, daß das Behandlungsmittel dem Zerstäubungsmittel entspricht.

21. Verfahren nach einem der vorhergehenden Ansprüche, dadurch gekennzeichnet, daß aus der flüssigen Phase (3) vor dem Zerstäuben wenigstens ein Phasenanteil ausgeschieden wird und die beiden Anteile getrennt gleichzeitig oder nacheinander zerstäubt werden.

22. Verfahren nach einem der vorhergehenden Ansprüche, dadurch gekennzeichnet, daß zur Zerstäubung Zwei-, Drei-, Vier- oder Mehrstoffdüsen (5) verwendet werden.

23. Verfahren nach einem der vorhergehenden Ansprüche, dadurch gekennzeichnet, daß das Zerstäubungsmittel über einen Kreislauf zur Wiederverwendung zurückgeführt wird.

24. Verfahren nach einem der vorhergehenden Ansprüche, dadurch gekennzeichnet, daß es seperat oder im Verbund mit einer thermisch/physikalischen oder chemisch/physikalischen Behandlung in einer Rest- und Abfallentsorgungsanlage eingesetzt wird.

25. Verfahren nach einem der vorhergehenden Ansprüche, dadurch gekennzeichnet, daß die flüssige Phase (3) vor der Zerstäubung eine Temperatur von 0°C bis 1800°C, insbesondere von 600°C bis 1400°C aufweist.

26. Verfahren nach einem der vorhergehenden Ansprüche, dadurch gekennzeichnet, daß dem Zerstäubungsprozeß ein Behandlungsprozeß mit UV-Licht, Mikrowelle folgt.

27. Verfahren nach einem der vorhergehenden Ansprüche, dadurch gekennzeichnet, daß dem Zerstäubungsmittel ein Zusatzmittel zum Einstellen des pH-Werts, zur Schaumunterdrückung und/oder zur Belagbildungsunterdrückung zugesetzt wird.

28. Verfahren nach einem der vorhergehenden Ansprüche, dadurch gekennzeichnet, daß das Zerstäubungsmittel zuerst in die flüssige Phase (3) eingeleitet wird, diese durchperlt und von der Oberfläche der flüssigen Phase (3) zur Düse (5) geleitet wird, wo die Zerstäubung durchgeführt wird.

29. Vorrichtung zur Durchführung des Verfahrens nach einem der vorhergehenden Ansprüche mit einem die flüssige Phase (3) enthaltenden Behälter (4) mit wenigstens einem Auslauf (10) und wenigstens einer Düse (5) für das Zerstäubungsmittel, dadurch gekennzeichnet, daß die Düse (5) als Ringdüse ausgebildet ist, die die durchlaufende flüssige Phase (3) umfaßt und vollständig zerstäubt.

30. Vorrichtung nach Anspruch 29, dadurch gekennzeichnet, daß die Düse (5) als Zwei-, Drei-, Vier- oder Mehrstoffdüse ausgebildet ist.

31. Vorrichtung nach Anspruch 29 oder 30, dadurch gekennzeichnet, daß der die flüssige Phase (3) enthaltende Behälter (4) als austauschbares Modul ausgebildet ist.

32. Vorrichtung nach einem der Ansprüche 29 bis 31, dadurch gekennzeichnet, daß der flüssige Phase (3) enthaltende Behälter (4) eine Abscheidekammer (15) aufweist, die seperat mit einer Düse (18) zum Zerstäuben des abgeschiedenen Anteils (16) versehen ist.

33. Vorrichtung nach einem der Ansprüche 29 bis 32, dadurch gekennzeichnet, daß der Auslauf (10) und die Düse (5) an der Oberseite des die flüssige Phase (3) enthaltenden Behälters (4) vorgesehen sind.

34. Vorrichtung nach einem der Ansprüche 29 bis 33, dadurch gekennzeichnet, daß mehrere Behälter (4, 24, 34) kaskadenartig hintereinander geschaltet sind.

35. Vorrichtung nach einem der Ansprüche 29 bis 34, dadurch gekennzeichnet, daß dem Behälter (4, 24 oder 34) eine Einheit (53, 54 oder 55) zur UV-Bestrahlung der Mikrowellen-Bestrahlung der zerstäubten flüssigen Phase (3) bzw. des Endprodukts nachgeschaltet ist.
